# FASCICULE DE BREVET EUROPEEN

(11) **EP 3 597 465 B1**
(45) Date de publication et mention de la délivrance du brevet: **14.04.2021**
(21) Numéro de dépôt: 19182482.0
(22) Date de dépôt: 26.06.2019
(51) Int. Cl.: B60K 15/03, B60S 1/48, B60K 15/01, F16L 3/12, F16L 11/11

(54) **GAINE SPIRALEE POUR LE MAINTIEN D'UNE CONDUITE A UN RESERVOIR DE VEHICULE AUTOMOBILE**
SPIRALUMMANTELUNG ZUM HALTEN EINER LEITUNG AN EINEM TANK EINES KRAFTFAHRZEUGS
SPIRAL SHEATH FOR FASTENING A PIPE TO A TANK OF A MOTOR VEHICLE

(30) Priorité: 17.07.2018 FR 1856580
(43) Date de publication de la demande: 22.01.2020
(73) Titulaire: PSA Automobiles SA, 78300 Poissy (FR)
(72) Inventeur: LE GUYADER, GAEL, 28130 ST MARTIN DE NIGELLES (FR); AZIZ SBAI, OUMAIMA, CASABLANCA (MA)

(56) Documents cités:
- EP-A1- 2 757 232
- DE-U1- 20 110 549
- FR-A1- 3 009 240
- GB-A- 2 454 271
- US-A1- 2004 144 779

## Description

La présente invention porte sur une gaine spiralée pour le maintien d'une conduite à un réservoir de véhicule automobile.

Les véhicules automobiles sont équipés d'un réservoir à carburant comportant une enveloppe contenant le carburant alimentant le moteur. Les véhicules peuvent également comprendre des réservoirs annexes et, notamment dans le cas de certains véhicules actuels à moteur diesel, un réservoir contenant un liquide de dépollution, tel que de l'urée ou un précurseur de l'urée. L'urée est utilisée comme agent réducteur en association avec un catalyseur pour réduire les oxydes d'azote via le processus de réduction catalytique sélective.

Certaines canalisations d'un système de dépollution sont destinées à cheminer sous le véhicule pour connecter le réservoir d'urée à un injecteur débouchant dans la ligne d'échappement du moteur thermique. Afin de maintenir en position les canalisations sur la zone du réservoir, ce dernier comporte au moins une gorge. Le document GB2454271A illustre cette situation.

Toutefois, dans certains cas, la gorge du réservoir a été prévue pour recevoir une canalisation d'un premier type, par exemple une canalisation d'un circuit de canister, et non pour recevoir une canalisation de liquide de dépollution qui présente un diamètre inférieur à celui de la canalisation du circuit de canister. En effet, les dimensions de la gorge peuvent avoir été définies pour prendre en compte une contrainte maximum du circuit de canister et pas uniquement pour le besoin de la canalisation de liquide de dépollution.

Or, pour des contraintes technico-économiques, le diamètre extérieur de la canalisation de liquide de dépollution ne peut pas évoluer pour reprendre la contrainte maximum de cette interface sur le réservoir à carburant. Il existe alors un problème d'interface et de compatibilité entre le diamètre extérieur de la canalisation de liquide de dépollution et l'espace de fixation compris dans la gorge de l'enveloppe du réservoir à carburant.

L'invention vise à remédier efficacement à cet inconvénient en proposant un ensemble pour véhicule automobile, caractérisé en ce qu'il comporte:
- un réservoir comprenant une enveloppe définissant un espace de remplissage,
- une gorge ménagée dans l'enveloppe du réservoir, et
- une canalisation ayant un diamètre externe inférieur à une largeur de la gorge, caractérisé en ce qu'une gaine spiralée est disposée autour de la canalisation, l'ensemble formé par la canalisation et la gaine spiralée entourant la canalisation étant disposé à l'intérieur de la gorge de manière à fixer la canalisation à l'enveloppe du réservoir.

L'invention permet ainsi d'augmenter localement le diamètre extérieur de la canalisation pour être fixé à l'intérieur de la gorge sans impacter la définition du réservoir à carburant par une quelconque modification ou ajouter des composants supplémentaires, ce qui limite le coût de revient de l'ensemble. L'invention permet également de garantir une compatibilité entre les matières de l'enveloppe du réservoir et la canalisation, généralement réalisés en plastique. L'invention limite en outre le risque d'abrasion ou de génération de bruit parasite. L'invention peut aisément être mise en œuvre en bord de ligne.

Selon une réalisation, l'ensemble formé par la canalisation et la gaine spiralée est encliqueté dans une zone d'encliquetage correspondante.

Selon une réalisation, la zone d'encliquetage comporte des godrons de maintien issus de parois latérales délimitant la gorge.

Selon une réalisation, la gaine spiralée est maintenue en translation sur la canalisation à l'aide de frettes.

Selon une réalisation, la gaine spiralée présente une couleur apportant un contraste par rapport à une teinte du réservoir.

Selon une réalisation, la gaine spiralée comporte des spires jointives les unes par rapport aux autres.

Selon une réalisation, la canalisation est une canalisation de liquide de dépollution.

Selon une réalisation, le réservoir est un réservoir à carburant.

Selon une réalisation, la gaine spiralée est réalisée dans un matériau plastique.

Selon une réalisation, des dimensions de la gaine spiralée, notamment un diamètre externe et un diamètre interne de la gaine spiralée, ainsi qu'un pas de spires sont choisis de façon à s'adapter à différentes applications.

L'invention sera mieux comprise à la lecture de la description qui suit et à l'examen des figures qui l'accompagnent. Ces figures ne sont données qu'à titre illustratif mais nullement limitatif de l'invention.

La figure 1 est une vue du dessus d'un réservoir à carburant de véhicule automobile comportant une gorge dans laquelle est fixée une canalisation de liquide de dépollution à l'aide d'une gaine spiralée;

La figure 2 est une vue détaillée de l'encliquetage à l'intérieur de la gorge de l'ensemble formé par la canalisation et la gaine spiralée;

La figure 3 est une vue en coupe transversale de l'ensemble formé par la canalisation de liquide de dépollution et la gaine spiralée;

Les figures 4a et 4b sont des vues en perspective de la forme définissant la gorge dans l'enveloppe du réservoir respectivement sans et avec l'ensemble canalisation et gaine spiralée.

Les éléments identiques similaires ou analogues conservent la même référence d'une figure à l'autre.

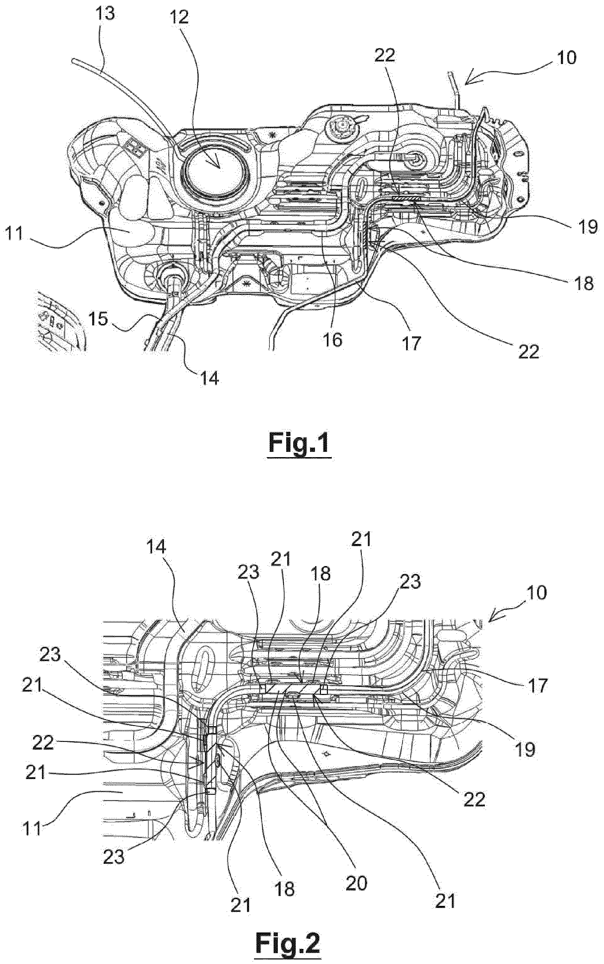

La figure 1 montre un réservoir 10 de carburant, notamment de véhicule automobile, comprenant une enveloppe 11, ici de forme allongée, définissant un espace de remplissage de carburant, et un module jauge-pompe 12 permettant de fournir une indication sur la quantité du contenu du réservoir 10 et d'alimenter les circuits du système d'injection du moteur thermique via une canalisation 13. Le réservoir 10 est compatible pour les versions essence et diesel afin de réduire la diversité de produits.

Une tubulure 14 de remplissage de carburant part du réservoir 10 et se termine à proximité d'une ouverture prévue dans un panneau externe de la carrosserie (non représenté). Un boîtier de trappe de remplissage disposé dans l'ouverture du panneau est conçu pour recevoir l'extrémité de la tubulure 14 de remplissage.

Un tuyau de dégazage 15 débouche d'une part dans le réservoir 10 et d'autre part dans la tubulure 14 de remplissage pour permettre d'évacuer l'air contenu dans l'enveloppe 11 du réservoir 10 lors du remplissage. Le tuyau de dégazage 15 suit un chemin le long de l'enveloppe 11 du réservoir 10 en étant positionné à l'intérieur d'une gorge 16 ayant une forme prédéfinie en fonction notamment de contraintes environnementales.

Par ailleurs, une canalisation 17 de liquide de dépollution assure une communication entre un réservoir de liquide de dépollution, par exemple un réservoir de système de réduction sélective catalytique, dit aussi système SCR (acronyme pour "Selective Catalytic Réduction" en anglais) et un injecteur disposé dans la ligne d'échappement.

La canalisation 17 suit un chemin le long de l'enveloppe 11 défini par une gorge 19 ayant une largeur supérieure à un diamètre externe de la canalisation 17. Afin d'assurer une fixation de la canalisation 17 à l'enveloppe 11, une gaine spiralée 18 est disposée autour de la canalisation 17. L'ensemble formé par la canalisation 17 et la gaine spiralée 18 entourant la canalisation 17 est disposé à l'intérieur de la gorge 19.

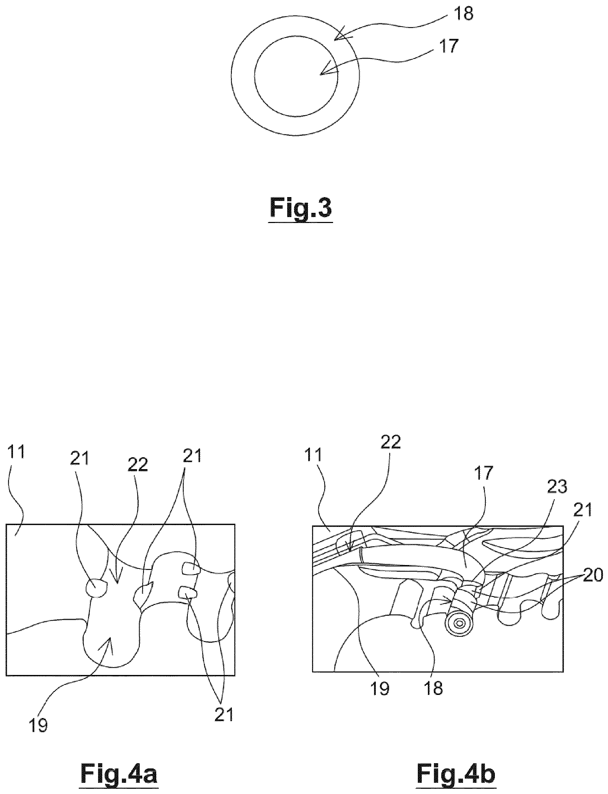

A cet effet, comme on peut le voir sur les figures 2 et 3, la gaine spiralée 18 présente globalement une forme tubulaire creuse délimitée par une pluralité de spires 20 ayant sensiblement un même diamètre interne à l'état non contraint. La gaine spiralée 18 pourra ainsi aisément être mise en place par enroulement autour de la canalisation 17 suivant un ou plusieurs tronçons prédéfinis de la canalisation 17. Cette mise en place de la ou des gaines spiralées 18 pourra être effectuée avant assemblage sur le réservoir 10 en usine. De préférence, la gaine spiralée 18 est maintenue en translation sur la canalisation 17 à l'aide de frettes de maintien 23 disposées aux extrémités de la gaine 18. Ces frettes 23 pourront par exemple consister en du scotch tissé ou non tissé.

Plus précisément, l'ensemble formé par la canalisation 17 et la gaine spiralée 18 est encliqueté dans une zone d'encliquetage 22 correspondante, tel que montré sur les figures 2, 4a, et 4b. La gaine 18 s'étend sur une portion de la canalisation 17 correspondant au moins à la longueur de la zone d'encliquetage 22. Autrement dit, la gaine spiralée 18 ne s'étend pas sur toute la longueur de la canalisation 17 disposée à l'intérieur de la gorge 19 mais uniquement localement dans la ou les zones d'encliquetage 22 prévues dans l'enveloppe 11.

La zone d'encliquetage 22 comporte des godrons de maintien 21 issus de parois latérales délimitant la gorge 19. Dans l'exemple représenté non limitatif, on pourra par exemple prévoir deux godrons de maintien 21 issus d'une paroi latérale de la gorge 19 et un troisième godron 21 issu de la paroi opposée et disposé longitudinalement entre les deux autres godrons 21. L'ensemble canalisation 17 et gaine 18 est alors maintenu par déformation élastique à l'intérieur de la gorge 19, les godrons 21 déformant légèrement la périphérie externe de la gaine 18 qui applique par réaction un effort de pression sur les godrons 21. Pour obtenir cet effet, l'homme du métier aura compris que le diamètre externe de l'ensemble canalisation 17 et gaine spiralée 18 à l'état non contraint est au moins égal à la largeur de la gorge 19.

Avantageusement, les spires 20 sont jointives les unes par rapport aux autres. On facilite ainsi le positionnement des spires 20 entre les trois godrons de maintien 21 pour immobiliser la canalisation 17 dans la gorge 19 tout en augmentant la résistance à l'arrachement.

Par ailleurs, la gaine spiralée 18 présente avantageusement une couleur apportant un contraste par rapport à une teinte du réservoir 10. Par exemple, pour un réservoir 10 de couleur sombre, notamment un réservoir 10 ayant une teinte grise ou noire, la gaine 18 pourra présenter une couleur claire, par exemple une couleur blanche. Cette différence de contraste facilite le contrôle post-assemblage de cette interface sur le réservoir à carburant 10.

Des dimensions de la gaine spiralée 18, notamment un diamètre externe et un diamètre interne de la gaine spiralée 18, ainsi qu'un pas de spires 20 sont choisis de façon à s'adapter à différentes applications.

Il est à noter que le diamètre interne de la gaine spiralée 18, qui est avantageusement légèrement inférieur au diamètre externe de la canalisation 17 à l'état non contraint, permet de réduire le risque de glissement de la gaine 18 sur la canalisation 17.

Dans un exemple de réalisation non limitatif, afin d'assurer l'interfaçage d'une canalisation 17 ayant un diamètre de 10mm avec une gorge 19 ayant une largeur de 12mm, la gaine spiralée 18 présente une longueur de l'ordre de 65mm avec un intervalle de tolérance de plus ou moins 2mm, un diamètre interne de l'ordre de 9.5mm et une épaisseur de l'ordre de 1 mm (par "de l'ordre de", on entend une variation de plus ou moins 10% autour de la valeur). Le pas de spires 20 de la gaine 18 est par exemple de l'ordre de 15mm. La gaine spiralée 18 permet ainsi de corriger l'écart de définition entre la canalisation 17 de liquide de dépollution et l'interface sur le réservoir 10 à carburant.

Avantageusement, la gaine spiralée 18 est réalisée dans un matériau plastique résistant à la projection de fluide occasionnelle, à la projection de sel, et autre contrainte environnementale. En variante, la gaine spiralée 18 est réalisée dans une matière non plastique.

En variante, le réservoir 10 pourra être un réservoir de liquide de dépollution ou un réservoir d'un autre type ayant une gorge de guidage de canalisations.

En variante, la canalisation 17 de liquide de dépollution pourra être remplacée par un autre type de canalisation suivant un chemin prédéterminé en sous caisse le long d'un réservoir, telle qu'une canalisation de canister ou un tuyau de dégazage, ou autre.

## Revendications

1. Ensemble pour véhicule automobile, **caractérisé en ce qu'**il comporte:
- un réservoir (10) comprenant une enveloppe (11) définissant un espace de remplissage,
- une gorge (19) ménagée dans l'enveloppe (11) du réservoir (10), et
- une canalisation (17) ayant un diamètre externe inférieur à une largeur de la gorge (19),
**caractérisé en ce qu'**une gaine spiralée (18) est disposée autour de la canalisation (17), l'ensemble formé par la canalisation (17) et la gaine spiralée (18) entourant ladite canalisation (17) étant disposé à l'intérieur de la gorge (19) de manière à fixer la canalisation (17) à l'enveloppe (11) du réservoir (10).

2. Ensemble selon la revendication 1, **caractérisé en ce que** l'ensemble formé par la canalisation (17) et la gaine spiralée (18) est encliqueté dans une zone d'encliquetage (22) correspondante.

3. Ensemble selon la revendication 2, **caractérisé en ce que** la zone d'encliquetage (22) comporte des godrons de maintien (21) issus de parois latérales délimitant la gorge (19).

4. Ensemble selon l'une quelconque des revendications 1 à 3, **caractérisé en ce que** la gaine spiralée (18) est maintenue en translation sur la canalisation (17) à l'aide de frettes (23).

5. Ensemble selon l'une quelconque des revendications 1 à 4, **caractérisé en ce que** la gaine spiralée (18) présente une couleur apportant un contraste par rapport à une teinte du réservoir (10).

6. Ensemble selon l'une quelconque des revendications 1 à 5, **caractérisé en ce que** la gaine spiralée (18) comporte des spires jointives (20) les unes par rapport aux autres.

7. Ensemble selon l'une quelconque des revendications 1 à 6, **caractérisé en ce que** la canalisation (17) est une canalisation de liquide de dépollution.

8. Ensemble selon l'une quelconque des revendications 1 à 7, **caractérisé en ce que** le réservoir (10) est un réservoir à carburant.

9. Ensemble selon l'une quelconque des revendications 1 à 8, **caractérisé en ce que** la gaine spiralée (18) est réalisée dans un matériau plastique.

## Patentansprüche

1. Anordnung für ein Kraftfahrzeug, **gekennzeichnet durch** :
- ein Reservoir (10) mit einer Hülle (11), die einen Füllraum definiert,
- eine Nut (19), die in dem Gehäuse (11) aus dem Tank (10) ausgebildet ist, und
- ein Rohr (17) mit einem Außendurchmesser von weniger als einer Breite der Nut (19),
**dadurch gekennzeichnet, dass** ein Spiralmantel (18) um das Rohr (17) angeordnet ist, wobei die durch das Rohr (17) und den das Rohr (17) umgebende Spiralmantel (18) gebildete Anordnung so innerhalb der Nut (19) angeordnet ist um das Rohr (17) am Gehäuse (11) des Vorratsbehälters (10) zu befestigen.

2. Anordnung nach nach Anspruch 1, **dadurch gekennzeichnet, dass** die Baugruppe gebildet durch das Rohr (17) und der spiralförmigen Mantel (18) in eine aufgeschnappt entsprechenden Einschnappen Zone (22).

3. Anordnung nach Anspruch 2, **dadurch gekennzeichnet, dass** die Verriegelungszone (22) Haltegadroons (21) umfasst, die von Seitenwänden kommen, die die Nut (19) begrenzen.

4. Anordnung nach einem der Ansprüches 1 bis 3, **dadurch gekennzeichnet, dass** die Spiralscheide (18) ist gehalten in Translation auf dem Rohr (17) mit Bands (23).

5. Anordnung nach einem der Ansprüches 1 bis 4, **dadurch gekennzeichnet, daß** der Mantel Spirale (18) hat eine Farbe einen Kontrast in Bezug auf einen Farbton Bereitstellen des Tanks (10).

6. Anordnung nach einem der Ansprüche 1 bis 5, **dadurch gekennzeichnet, dass** die Spiralscheide (18) aufweist, nebeneinanderliegenden Windungen (20) in Bezug zueinander.

7. Anordnung nach einem der Ansprüche 1 bis 6, **dadurch gekennzeichnet, dass** das Rohr (17) ist ein Reinflüssigkeitsleitung.

8. Anordnung nach einem der Ansprüche 1 bis 7, **dadurch gekennzeichnet, dass** der Tank (10) ein Kraftstofftank ist.

9. Anordnung nach einem der Ansprüche 1 bis 8, **dadurch gekennzeichnet, dass** der Spiralmantel (18) aus einem Kunststoffmaterial besteht.

## Claims

1. Assembly for a motor vehicle, **characterized in that** it comprises :
- a reservoir (10) comprising an envelope (11) defining a filling space,
- a groove (19) formed in the casing (11) of the reservoir (10), and
- a pipe (17) having an external diameter less than a width of the groove (19), **characterized in that** a sheath spiraled (18) is arranged around the pipe (17), the assembly formed by the pipe (17) and the sheath spiral (18) surrounding said pipe (17) being arranged to inside the groove (19) so as to fix the pipe (17) to the casing (11) of the reservoir (10).

2. Assembly according to Claim 1, **characterized in that** the assembly formed by the pipe (17) and the spiral sheath (18) is snapped into a corresponding snapping zone (22).

3. Assembly according to Claim 2, **characterized in that** the latching zone (22) comprises holding gadroons (21) coming from side walls delimiting the groove (19).

4. Assembly according to any one of claims 1 to 3, **characterized in that** the spiral sheath (18) is maintained in translation on the pipe (17) with bands (23).

5. Assembly according to any one of claims 1 to 4, **characterized in that** the sheath spiral (18) has a color providing a contrast with respect to a shade of the reservoir (10).

6. Assembly according to any one of Claims 1 to 5, **characterized in that** the spiral sheath (18) comprises contiguous turns (20) with respect to one another.

7. Assembly according to any one of claims 1 to 6, **characterized in that** the pipe (17) is a clean-liquid line.

8. Assembly according to any one of claims 1 to 7, **characterized in that** the tank (10) is a fuel tank.

9. Assembly according to any one of claims 1 to 8, **characterized in that** the spiral sheath (18) is made of a plastic material.
